# EUROPÄISCHE PATENTANMELDUNG

(11) **EP 2 330 387 A2**
(43) Veröffentlichungstag der Anmeldung: **08.06.2011**
(21) Anmeldenummer: 10015251.1
(22) Anmeldetag: 03.12.2010
(51) Int. Cl.: G01D 5/14

(54) **Hall-basierter Linearwegsensor für mittellange Wege**

(30) Priorität: 04.12.2009 DE 102009066734
(71) Anmelder: Hirschmann Automotive GmbH, 6830 Rankweil-Brederis (AT)
(72) Erfinder: Dengler, Werner, 5132 Geretsberg (AT)
(74) Vertreter: Greif, Thomas

(57) **Zusammenfassung**

Sensoranordnung (1), ausgebildet zur Erfassung der Position eines linear bewegbaren Elementes (3), wobei die Sensoranordnung einen Magneten (5) sowie ein die Position des Magneten (5) erfassendes Sensorelement (4) aufweist, wobei erfindungsgemäß vorgesehen ist, dass ein ortsfester Träger (2) vorgesehen ist, wobei der Träger (2) zur Aufnahme des Sensorelementes (4) und zur Aufnahme des linear und relativ zu dem den Magneten (5) umfassenden bewegbaren Elementes (3) ausgebildet ist.

## Beschreibung

Die Erfindung betrifft eine Sensoranordnung, ausgebildet zur Erfassung der Position eines linear bewegbaren Elementes, wobei die Sensoranordnung einen Magneten sowie ein die Position des Magneten erfassendes Sensorelement aufweist, gemäß den Merkmalen des Oberbegriffes des Patentanspruches 1.

Nach technischem Stand werden Linearweg-Meassysteme auf Hall-Basis üblicherweise bei Wegmessungen bis ca. 40 mm eingesetzt. Größere Wegmessungen basieren auf komplizierten Slnus-Kosinus-Magnetlsierungen oder werden durch induktive, kapazitive oder resistive Systeme realisiert.

Der Erfindung liegt die Aufgabe zugrunde, eine Sensoranordnung bereit zu stellen, welche verschlelßfrei Linearwege auf einfache Weise mit guter Genauigkeit misst Insbesondere soll die Herstellung des magnetischen Target (Magnet) möglichst einfach gehalten werden, um insbesondere die Kosten bei Anwendungen einer solchen Sensoranordnung auf dem fahrzeugtechnischen (automotiven) Gebiet zu senken.

Diese Aufgabe ist durch die Merkmale des Patentanspruches 1 gelöst.

Erfindungsgemäß ist ein ortsfester Träger vorgesehen, wobei der Träger zur Aufnahme des Sensorelementes und zur Aufnahme des linear und relativ zu dem den Magneten umfassenden bewegbaren Elementes ausgebildet ist. Die betelligten Bauelemente können auf einfache Art und Weise, z. B, in einem Kunststaffspritzgussverfahren, hergestellt und zu der fertigen Sensoranordnung zusammengebaut werden. Der ortsfeste Träger nimmt dabei den Magneten auf, wobei das linear bewegbare Element relativ zu dem ortsfester) Träger hin und her bewegt werden kann und den Magneten aufnimmt, wobei sich bei der Hin- und Herbewegung des linear bewegbaren Elementes die Feldlinien ändernt, die von dem Sensorelement, insbesondere einem magnetisch sensitiven Sensorelement, erfasst werden können.

In Weiterbildung der Erfindung ist zwecks einfacher Realisierung des Magneten dieser länglich gestaltet und weist einen eckigen Querschnitt auf und ist längs seiner Erstreckung diagonal magnetisiert. D. h., dass bei diesem ersten Lösungsansatz ein diagonal magnetisierter Magnetwerkstoff in einem einteiligen Magneten eingesetzt wird. Die Herstellung eines solchen Magneten ist denkbar einfach, da er alls kunststoffgebundener Magnet ausgebildet ist und insbesondere in vorteilhafter Weise von einem anisotropen Magnetmaterial gebildet ist, wobei sich der als kunstatoffgebundener Magnet insbesondere mit anisotropem Magnetmaterial (oder anderem denkbaren geeigneten Magnetmaterial) direkt beim Spritzen mit im Werkzeug eingelassenen Permanentmagneten aufmagnetlsleren lässt. Das bedeutet hinsichtlich des hier wichtigen Herstellungsverfahren für den Magneten, dass der Magnet in einem Spritz/erfahren oder Spritzgussverfahren hergestellt wird, indem eine Negativform, die die spätere Form des Magneten vorgibt, mit einem geeigneten magnetisierbaren Kunststoffmaterial (welches noch nicht oder nur schwach magnetisiert ist) aufgefüllt wird, wobei dieses magnetisierbare Material mit einem Permanentmagneten, der in dem Werkzeug (Spritzgussform) eingelassen ist, diagonal aufmagnetisiert wird. Dadurch lässt sich der Magnet auf einfache Art und Weise schnell herstellen und ist aufgrund seiner länglichen Form sehr gut geeignet, dass mit ihm lange Wege, z. B. mit einer Länge bis zu 400 mm (oder kleiner oder darüber hinaus) erfasst werden können.

In einer alternativen Ausgestaltung ist erfingdungsgemäß vorgesehen, dass der Magnet länglich ist und einen runden oder ovalen Querschnitt aufweist und längs seiner Erstreckung spiralförmig magnetisiert ist. Bei diesem zweiten wichtigen Lösungsansatz wird also mit einem entsprechenden Herstellungsverfahren ein spiralförmig aufmagnetisierter Magnet realisiert. Dieser lässt sich auf einfache Art und Weise als kunststoffgebundener Magnet extrudieren und mittels einer rotierenden Magnetisiervorrichtung aufmagnetisieren. Das bedeutet, dass dieser spiralförmig aufmagnetlslerte Magnet in einem Extrudierverfahren aus einem kunststoffgebundenen Magnetmaterial, welches insbesondere von einem anisotropen Magnetmaterial gebildet ist, hergestellt wird. Während der Herstellung oder danach wird das kunatstoffgebundene Magnetmaterial, insbesondere das anisotrope Magnetmaterial, mit einer rotlerenden und gleichzeitig sich über die axiale Erstreckung bewegenden Magnetisiervorrichtung aufmagnetislert, so dass nach dieser Herstellung der Magnet längs seiner Erstreckung spiralförmig magnetisiert Ist. Dabei ist vorzugsweise von Anfang bis Ende des einteiligen Magneten ein einziger Wechsel der Pole vorgesehen, wobei es auch denkbar ist, dass längs seiner Erstreckung der Wechsel der Pole des Magneten mehr als einmal, also mehrfach wechselt,

Bezüglich der Funktionsweise der erfindungsgemäßen Sensoranordnung gilt sowohl für den diagonal längs erstreckenden Magneten als auch für den spiralförmig aufmagnetisierten Magnet das gleiche Messprinzip. Auf einer gedachten Mittellinie ist ein magnetisch sensitives Sensorelement, insbesondere ein Hall-Sensor, in oder an dem Träger der Sensoranordnung befestigt und positionlert, welches in der Lage ist, die Gradlenten der Magnetfeldlinien, die sich bei linearer Bewegung des Magneten relativ zu dem Sensorelement verändern, zu detektieren. Denn bei Bewegung des Magneten relativ linear gegenüber dem Sensorelement werden aus Sicht des Sensorelementes die Winkel der Magnetfeldlinien kontinulerlich verändert, so dass diese Veränderung sich detektieren und auswerten lässt.

Ein Ausführungebelspiel einer erfindungagemäßen Sensoranordnung sowie die beiden Varianten des positionsgebenden Magneten sind In den Figuren gezeigt und im Folgenden näher erläutert.

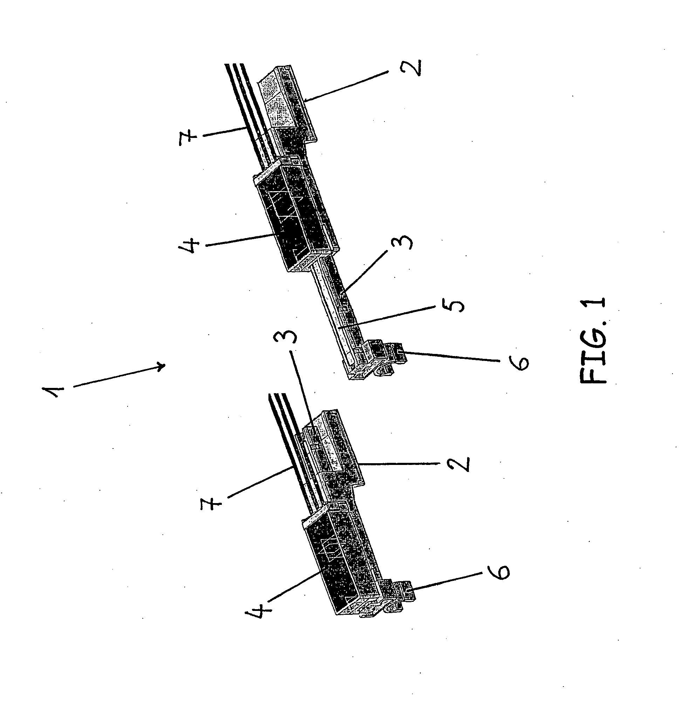

In Figur 1 ist, soweit im Einzelnen dargestellt, mit der Bezugsziffer 1 schematisch eine Sensoranordnung dargestellt, die einen ortsfesten Träger 2 aufweist. Der Träger 2 lst in geeigneter Weise im vorgesehenen Einbauraum angeordnet und befestigt und nimmt ein relativ zu dem ortsfesten Träger 2 relativ und linear bewegbares Element 3, vorzugsweise ausgebildet als Schleber, auf. Die Konturen des linear bewegbaren Elementes 3 und die Führungsaufnahme in dem ortsfesten Träger 2 sind aufeinander abgestimmt, so dass das Element 3 linear zu dem Träger 2 bewegt werden kann. Der ortsfeste Träger 2 weist weiterhin ein Sensorelement 4, insbesondere ein magnetisch sensitives Sensorelement wie z. B. ein Hall-Sensor, auf. In oder an dem linear bewegbaren Element 3 lst ein Magnet 5, insbesondere ein Permanent-Magnet, angeordnet und befestigt. Weiterhin weist das Element 3 eine Halterung 6 auf, mit dem es an einem Bauteil befestigt werden kann, dessen relativ zu dem ortsfesten Träger 2 veränderbare Position mit dem Sensorelement 4 gemessen werden soll. In einer Ausgestaltung der Erfindung können der ortsfeste Träger 2 und/oder das linear bewegbare Element 3 als voneinander separate in einem Kunststoffspritzgussverfahren hergesteilte Bauteile sein. Alternativ dazu Ist es denkbar, dass das linear bewegbare Element 3 keine Halterung 8 aufweist, sondern das Element 3 einstückiger Bestandteil des Bauteiles, dessen Position erfasst werden soll, ist. Von dem Sensorelement 4 gehen in erforderlicher Anzahl eine Signalleitung 7 (oder auch mehrere Signalleitungen) zu einer nachgeschalteten Auswerte-Eindchtung ab.

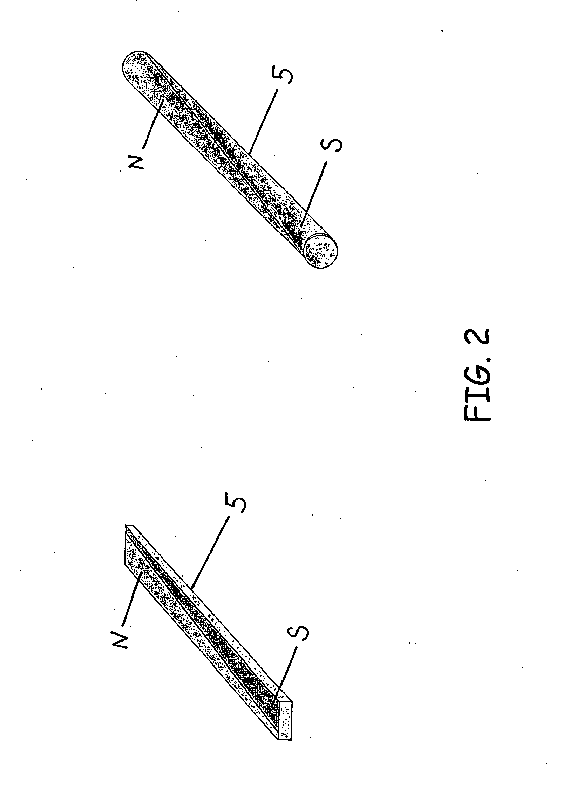

In Figur 2 sind die beiden Bauformen des Magneten 5 gezeigt, In Figur 2, linke Darstellung, ist erkennbar, dass der Magnet 5 länglich ist, wobei seine Länge vorzugsweise der Länge des zu erfassenden Weges entspricht. Zur Vereinfachung der Festlegung und Befestigung des Magneten 5 an dem linear bewegbaren Element 3 weist der Magnet 5 einen eckigen, Insbesondere einen rechteckigen oder quadratischen Querschnitt auf und ist längs seiner Erstreckung diagonal magnetisiert. Diese diagonale Magnetisierung ist durch den Nordpol N und den Südpol S dargestellt.

In Figur 2, rechte Darstellung, Ist gezeigt, dass auch hier der Magnet 5 länglich ist, jedoch einen runden oder ovalen Querschnitt aufweist, wobei sich dieser Querschnitt dann anbietet, wenn auch die Aufnahme für den Magneten 5 in dem Element 3 einen korrespondierenden Querschnitt aufweist oder die Aufbau- oder Bewegungsverhäitnisse der Sensoranordnung 1 einen solchen Querschnitt erforderlich machen. Außerdem ist erkennbar, dass der Magnet 5 längs seiner Erstreckung hier einmal spiralförmig magnetisiert ist. Der Wechsel vom Nordpol N zum Südpol S während seiner Längeorstreckung ist bei der Ausführungsform gemäß Figur 2, rechte Darstellung, einmal vorhanden, kann aber auch mehr als einmal, d. h. mehrfach vorhanden sein.

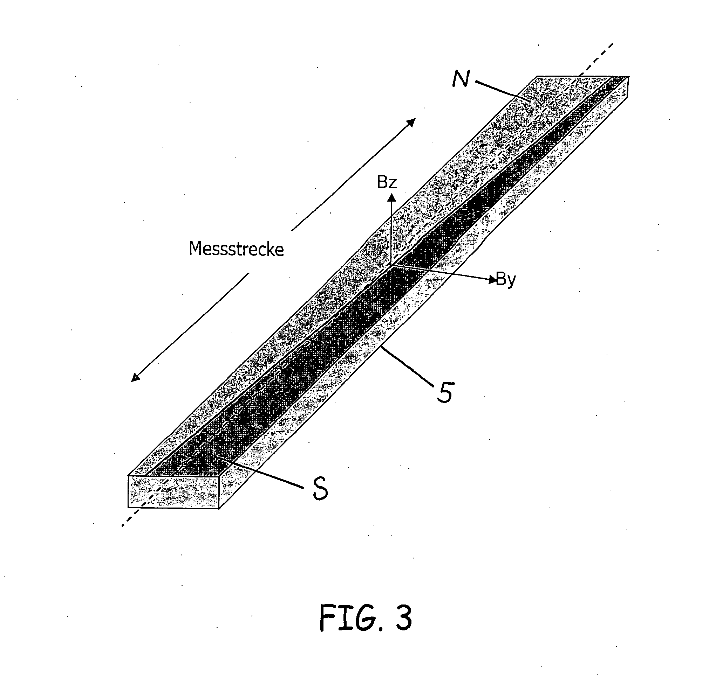

Figur 3 zeigt anhand des diagonal magnetisierten Magneten 5 die Wirkungsweise der erflndungagemäßen Sensoranordnung, wobei die folgenden Ausführungen auch für den spiralförmig magnetisierten Magneten 5 gelten. Da der Magnet 5 in dem relativ linear bewegbaren Element 3 angeordnet ist, werden bei Bewegung des Magneten 5 infolge der Positionsveränderung des Bauteiles, dessen Position erfasst werden soll, relativ zu dem ortsfesten Träger 2 die Winkel der Magnetfeldlinien gegenüber dem Sensorelement 4 kontinuierlich verändert, wobei sich diese Veränderung detektieren und auswerten lässt. Im dargestellten Beispiel gemäß Figur 3 werden die senkrecht zu der Bewegungsrichtung (Messstrecke) aufgenommenen magnetischen Anteile By und Bz der Feldlinien zur Berechnung der tatsächlichen Position des Magneten als Absolutwert herangezogen, Vereinfacht kann gesagt werden, dass aus der Funktion Arkustangens von By zu Bz [arctan (By/Bz)] auf die Position des Magneten 5 (und folglich des Bauteiles, dessen Position erfasst werden soll) zu dem ortsfesten Sensorelement 4 geschlossen werden kann.

### Bezugszeichenliste

- 1.: Sensoranordnung
- 2.: Ortsfester Träger
- 3.: Linear bewegbares -Element
- 4.: Sensorelement
- 5.: Magnet
- 6.: Halterung
- 7.: Signalleitung

## Patentansprüche

1. Sensoranordnung (1), ausgebildet zur Erfassung der Position eines linear bewegbaren Elementes (3), wobei die Sensoranordnung einen Magneten (5) sowie ein die Position des Magneten (5) erfassendes Sensorelement (4) aufweist, **dadurch gekennzeichnet, dass** ein ortsfester Träger (2) vorgesehen ist, wobei der Träger (2) zur Aufnahme des Sensorelementes (4) und zur Aufnahme des linear und relativ zu dem den Magneten (5) umfassenden bewegbaren Elementes (3) ausgebildet ist.

2. Sensoranordnung (1) nach Anspruch 1, **dadurch gekennzeichnet, dass** das Sensorelement (4) als magnetisch sensitives Sensorelement ausgebildet ist.

3. Sensoranordnung (1) nach Anspruch 1 oder 2, **dadurch gekennzeichnet, dass** der Magnet (5) länglich ist und einen eckigen Querschnitt aufweist und längs seiner Erstreckung diagonal magnetisiert ist.

4. Sensoranordnung (1) nach Anspruch 3, **dadurch gekennzeichnet, dass** der Magnet (5) als kunststoffgebundener Magnet ausgebildet ist.

5. Sensoranordnung (1) nach Anspruch 4, **dadurch gekennzeichnet, dass** der Magnet (5) von einem anisotropen Magnetmaterial gebildet ist.

6. Sensoranordnung (1) nach Anspruch 1 oder 2, **dadurch gekennzeichnet, dass** der Magnet (5) länglich ist und einen runden oder ovalen Querschnitt aufweist und längs seiner Erstreckung spiralförmig magnetisiert ist.

7. Sensoranordnung (1) nach Anspruch 6, **dadurch gekennzeichnet, dass** der Magnet (5) als kunststoffgebundener Magnet extrudiert ist.

8. Sensoranordnung (1) nach Anspruch 7, **dadurch gekennzeichnet, dass** der Magnet (5) von einem anisotropen Magnetmaterial gebildet ist.

9. Sensoranordnung (1) nach einem der vorhergehenden Ansprüche, **dadurch gekennzeichnet, dass** der Träger (2) und/oder das linear bewegbare Element (3) als ein kunststoffgespritztes Bauteil ausgebildet ist.
